# EUROPEAN PATENT SPECIFICATION

(11) **EP 1 846 929 B1**
(45) Date of publication and mention of the grant of the patent: **16.06.2010**
(21) Application number: 06707978.0
(22) Date of filing: 02.02.2006
(51) Int. Cl.: G21K 1/06, G01J 3/06, G02B 7/00

(54) **MONOCHROMATOR WITH MOVEMENT DEVICE**
MONOCHROMATOR MIT BEWEGUNGSEINRICHTUNG
MONOCHROMATEUR AVEC DISPOSITIF DE MISE EN MOUVEMENT

(30) Priority: 04.02.2005 IT UD20050012
(43) Date of publication of application: 24.10.2007
(73) Proprietor: Sincrotrone Trieste S.C.p.A., 34012 Basovizza (IT)
(72) Inventor: BUSETTO, Edoardo, I-34129 Trieste (IT)
(74) Representative: Petraz, Gilberto Luigi
(86) International application number: PCT/EP2006/050617
(87) International publication number: WO 2006/082216

(56) References cited:
- DE-A1- 3 400 299
- US-A- 4 462 689
- US-A- 5 157 702
- US-A- 5 268 954

## Description

### FIELD OF THE INVENTION

The present invention concerns a monochromator with a movement device, used to isolate a beam of output monochromatic radiations from a beam of input polychromatic radiations. To be more exact, the movement device according to the invention is able to position optical elements, such as for example one or more crystals, so that the beam of output radiations is monochromatic, that is, it possesses only one desired wavelength, with respect to the beam of input polychromatic radiations.

### BACKGROUND OF THE INVENTION

Synchrotron radiation, produced by curving magnets or other instruments such as wigglers, has a usable spectrum that extends from the infrared zone to hard x-rays passing through visible and ultraviolet.

In most cases, this radiation needs to be made monochromatic before it is used in the experimental chamber, where measurements, experimental analyses and other tests or observations are carried out.

It is therefore necessary that a determinate wavelength is discriminated from the initial spectrum and this is obtained by means of mechanical movements of optics disposed on the path of the beam, which optics take the name of monochromators.

It is essential that this delicate movement is performed with absolute precision so as not to prejudice the characteristics of stability, brilliance and coherence of the original beam of radiations of photons, inasmuch as if this were not so, the characteristics of the experimental results would deteriorate.

In order to do this, it is necessary to face a multitude of problems, very often correlated, deriving from heat loads, vibrations, elastic deformation of the materials used and, not least, from working errors.

In the case of monochromators in the field of hard X-rays, the principle used to make a beam of radiations monochromatic is diffraction by a single crystal. The x radiation, with a wavelength in the same range of size as the inter-atomic distance of the crystal, enters a condition of diffraction with the reticular structure when a precise condition occurs between the wavelength and the angle of incidence on the reticular planes. This relation bears the name of the discoverer, and is thus known as Bragg's Law.

The selected wavelength of the radiation changes according to the angle of incidence and precisely this characteristic is normally used in order to select the desired wavelengths and consequently the energies that are closely correlated to the wavelength.

The condition in which a system of two parallel crystals is maintained in a condition of maximum diffraction intensity is guaranteed by errors in the parallelism between the Bragg planes of the two crystals that are typically less than some Arco seconds (1 Arco second = 1/3600 of a degree). If to this we add that this condition must be maintained along the whole energy scanning of a monochromator (translations of hundreds of millimeters and angular movements typically of tens of degrees of rotation), it can be understood that the level of components used and the mechanical working required is an essential element to obtain an acceptable result.

It is equally important to control these movements and to identify possible causes of malfunctioning; this is performed with sophisticated instruments and the widespread use of electronics.

There are various solutions to this problem, which are therefore of public knowledge, but each of them, far from being ideal, has defects or limitations.

In general, in monochromators, one of the disadvantages is the need to have the movement motors and all the cables related thereto positioned inside the vacuum chamber.

Although there are products on the market which adequately satisfy these requirements, the solution that provides to dispose all the components in the vacuum chamber is certainly costly, delicate and the possible source of problems.

Such problems concern both the question of heat, since the motors in their functioning produce heat, and it is therefore necessary to dispose conduction systems in the vacuum in order to remove the heat, and also the movement itself, when there are simultaneously wide working angles and large translations.

US-A-4.462.689, on which the preamble of the main claim is based, discloses a double crystal X-ray monochromator comprising crystal assemblies mounted on a support structure, in which one crystal is rotated and the other crystal is rotated and translated by respective external motors.

One purpose of the present invention is to achieve a monochromator with a movement device in which the construction is mechanically simplified, giving advantages in the construction and assembly of the components.

Another purpose of the present invention is to achieve a monochromator with a movement device in which the outer sizes, and consequently the inner volumes of the monochromator itself, are more limited with respect to known monochromators, so as to guarantee shorter times to reach the working pressures.

Another purpose of the present invention is to achieve a monochromator with a movement device in which the inner mechanical system is extremely stable, while still allowing to lower the costs of production and maintenance.

Another purpose of the present invention is to achieve a monochromator with a movement device in which the sources that produce heat inside the chamber are reduced, thus reducing the danger of heat drift and the consequent need to prepare conduction systems to remove said heat.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a monochromator according to the present invention comprises a chamber inside which optical means are disposed, able to isolate a beam of output monochromatic radiations from a beam of input polychromatic radiations and a movement device.

In the preferential embodiment, the optical means comprise at least two optical elements which, in the case of monochromators used in the field of hard X-rays, are of the single crystal diffraction type.

The movement device according to the present invention comprises motor means able to orientate the optical means with respect to the direction of incidence of the beam of radiations, so that the beam of monochromatic radiations exiting from the chamber possesses at least a desired wavelength with respect to the beam of polychromatic radiations entering into the chamber.

This orientation of the optical means determines the wavelength of the emerging beam due to the fact that the selected wavelength is a function of the value of the angle of incidence with which the beam arrives on the optical means.

According to the preferential embodiment of the invention, a beam of radiations is sent against a first optical element, from which it is reflected and directed towards a second optical element. The latter is oriented so as to maintain the condition of diffraction and parallelism between the beam of input polychromatic radiations and the beam of output monochromatic radiations, as the angle of the first optical element varies.

According to a characteristic of the present invention, the motor means, which determine the displacement of the optical means, are disposed outside the chamber, are connected to the relative optical means by means of mechanical transmission means and are preferably independent of each other.

Thanks to the disposition of the motor means outside the chamber, the invention allows to reduce the sources that produce heat inside the chamber, thus reducing the danger of heat drift and the consequent need to prepare conduction systems to remove said heat.

In this way, the mechanical construction is more stable with respect to known solutions, and at the same time it allows to reduce the costs of production and maintenance.

Moreover, thanks to the outside positioning of the motor means, the outer sizes and consequently the inner volumes of the monochromator itself are more limited with respect to known solutions, and thus guarantee quicker times to reach working pressures.

According to a preferential embodiment of the present invention, the chamber where the optical means are disposed is airtight and is maintained at a pressure lower than atmospheric pressure.

In using the monochromator with radiation beams having a wavelength corresponding to X-rays, the chamber is kept in conditions of high vacuum, that is, with a pressure in the range of 10⁻⁷ - 10⁻⁹ mBar.

In order to guarantee the airtight condition of the chamber, and to allow the selective movement of the optical means, sealing means are provided, associated with at least one wall of the chamber, which allow at least a relative mechanical transmission means to be introduced through said wall.

According to the invention, the mechanical transmission means comprise a first transmission member associated with a first drive unit disposed outside the chamber and able to selectively transmit a rotational motion to the first optical element.

The mechanical transmission means also comprise a second transmission member associated with a second drive unit disposed outside the chamber, and able to selectively transmit a rotational-translational motion to the second optical element.

According to one embodiment of the invention, it is provided to associate with the motor means and/or with the mechanical transmission means sensor means able to detect at least the position of the relative optical means.

A command and control unit is also provided, which commands and controls at least the motor means according to the data detected by the sensor means and the wavelength of the beam of monochromatic radiations which the user desires to obtain.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partly sectioned lateral view of a monochromator comprising a movement device according to the present invention;
- fig. 2 is a section from II to II of fig. 1;
- fig. 3 is a section from III to III of fig. 1;
- fig. 4 is an enlarged detail of the movement device shown in fig. 2;
- fig. 5 is a front view of the detail in fig. 2;
- fig. 6 is a lateral view of another detail of the movement device shown in fig. 1;
- fig. 7 is a partial section of fig. 6;
- fig. 8 shows schematically the functioning principle of the movement device of the monochromator in a first operating position;
- fig. 9 shows schematically the functioning principle of the movement device of the monochromator in a second operating position.

### DETAILED DESCRIPTION OF A PREFERENTIAL FORM OF EMBODIMENT

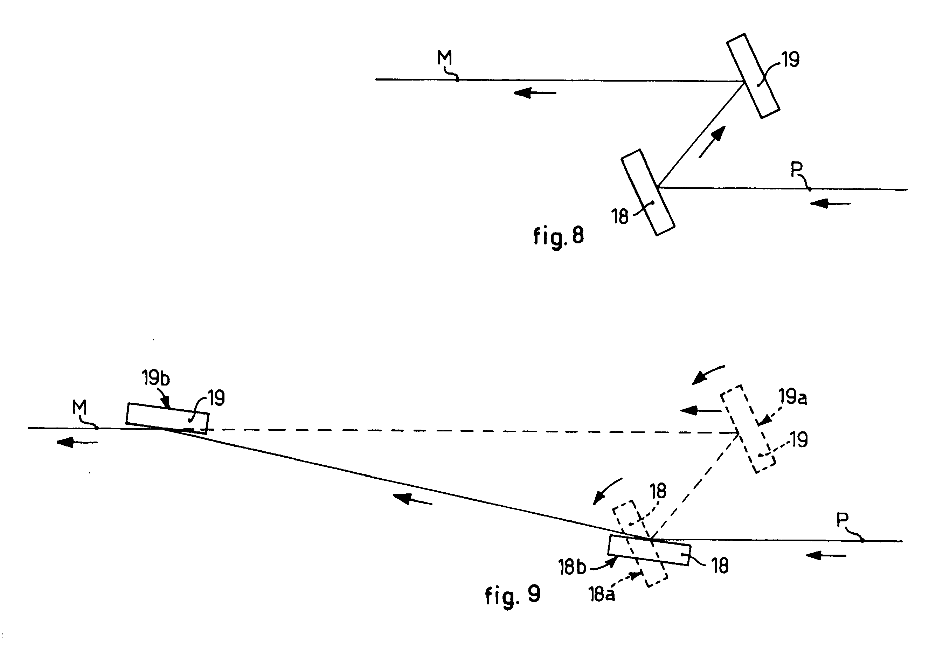

With reference to the attached drawings, a monochromator 11 is used to isolate a beam of output monochromatic radiations "M" from a beam of input polychromatic radiations "P" (figs. 8 and 9) by means of a process of diffraction obtained in sequence by means of two crystals 18, 19.

The polychromatic radiations possess wavelengths belonging to the range comprised approximately between infrared and hard X-rays; in this case, the beam of polychromatic radiations "P" has wavelengths belonging to the range of hard X-rays.

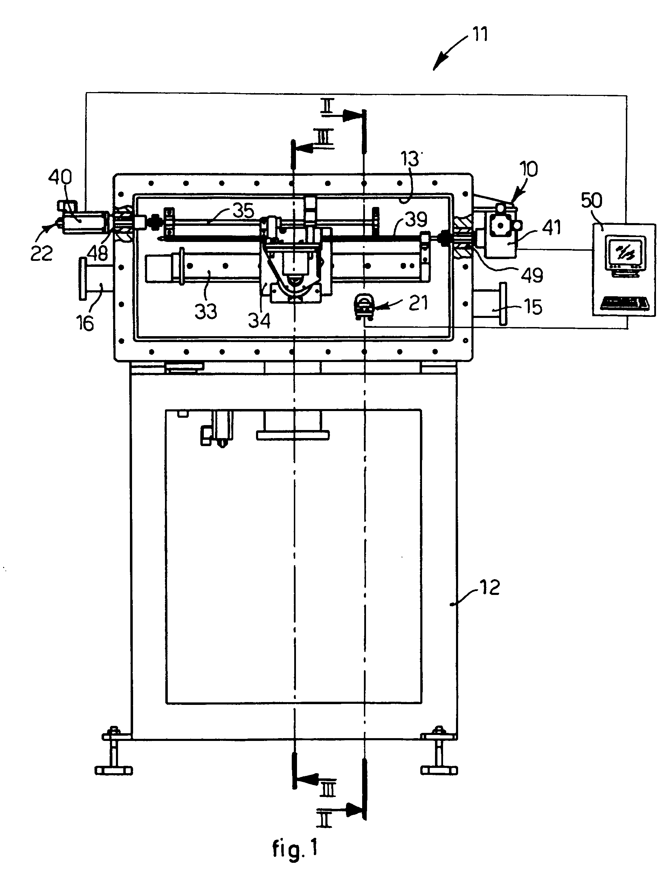

The monochromator 11 (figs. 1, 2 and 3), in the solution shown here, comprises a supporting frame 12 made of steel tubes with a square section, and an airtight chamber 13, for example made of stainless steel, in which the vacuum is created in a known manner.

The airtight chamber 13 comprises, in the zone where the beam of radiations enters, a flange 15 connectable to a source of polychromatic radiations, of a known type and not shown here, and in the output zone, a flange 16 connectable to measurement or analysis devices or similar.

Normally, the flanges 15, 16 are misaligned vertically with respect to each other by a quantity that depends on the specific processing requirements by the user, and on the characteristics of the devices located upstream and/or downstream of the monochromator 11.

The monochromator 11 also comprises a movement device 10 to move the two crystals 18 and 19 with respect to two respective axes, a first axis, or axis of the first crystal 18, and second axis, or axis of the second crystal 19.

With reference to figs. 8 and 9, the first crystal 18 intercepts the beam of input polychromatic radiations "P", discriminating the wavelength thereof, and hence the energy, according to the value of the relative angle of incidence.

The second crystal 19 receives the monochromatic beam "M" from the first crystal 18 and directs it appropriately, in order to maintain at a desired value the misalignment between the input height and output height of the beam from the airtight chamber 13.

It is clear that, as the angular position of the first crystal 18 varies with respect to the incident beam, it is necessary to translate and rotate the second crystal 19 too, in order to maintain the condition of diffraction and to keep the misalignment between the beam of polychromatic radiations "P" and the beam of monochromatic radiations "M" constant.

The movement device 10 comprises a first movement unit 21 associated with a drive unit 31 and suitable to rotate the first crystal 18, in this case, from a first position indicated by a line of dashes in fig. 9 with the number 18a, to a second position 18b.

The movement device 10 also comprises (figs. 1, 2 and 3) a second movement unit 22 associated with two drive units 40 and 41 for the rotation-translation of the second crystal 19 from a first position 19a (fig. 9) indicated by a line of dashes in fig. 9, to a second position 19b.

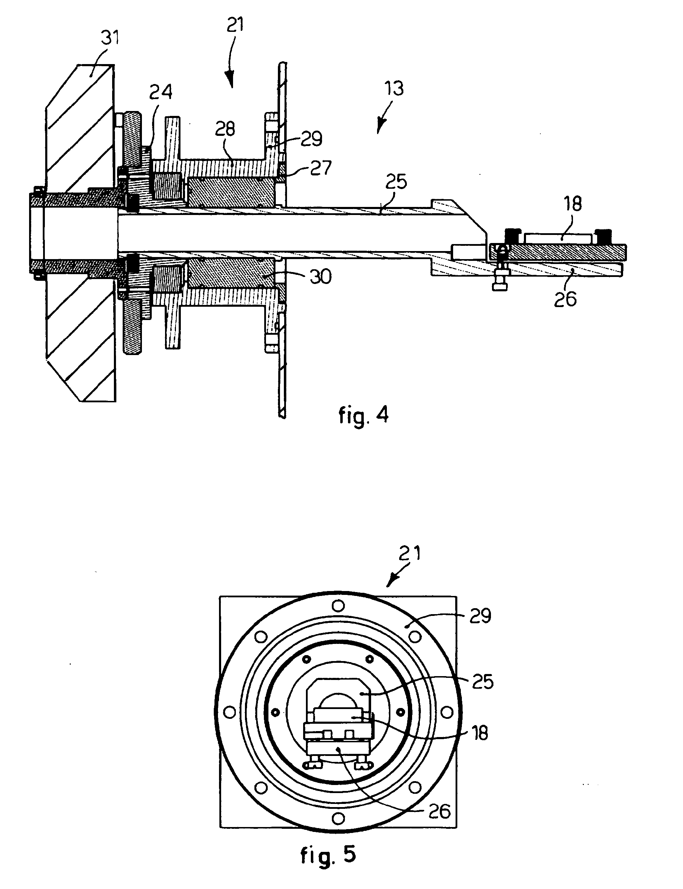

To be more exact, the first movement unit 21 (fig. 4) comprises a bar 25, advantageously metal, at one end of which a supporting element 26 is attached (figs. 4 and 5) for the first crystal 18, and the other end of which is inserted in a hollow metal cable 28.

To guarantee the airtight seal, even in dynamic conditions, in the entrance zone of the bar 25, inside the airtight chamber 13, sealing packings 30 are provided, which also allow the bar 25 to rotate around its own axis in order to obtain the desired rotation of the first crystal 18.

The hollow cable 28 comprises a circular flange 29 which is attached against the outer wall of the airtight chamber 13 so as to guarantee, together with a sealing ring 27, the static seal of the inlet zone where the bar 25 enters the airtight chamber 13.

Outside the airtight chamber 13, and mechanically connected to the first movement unit 21, the drive unit 31 is disposed, advantageously consisting of a stepping motor with 500 steps per rev, or under direct current, and a reduction mechanism 24.

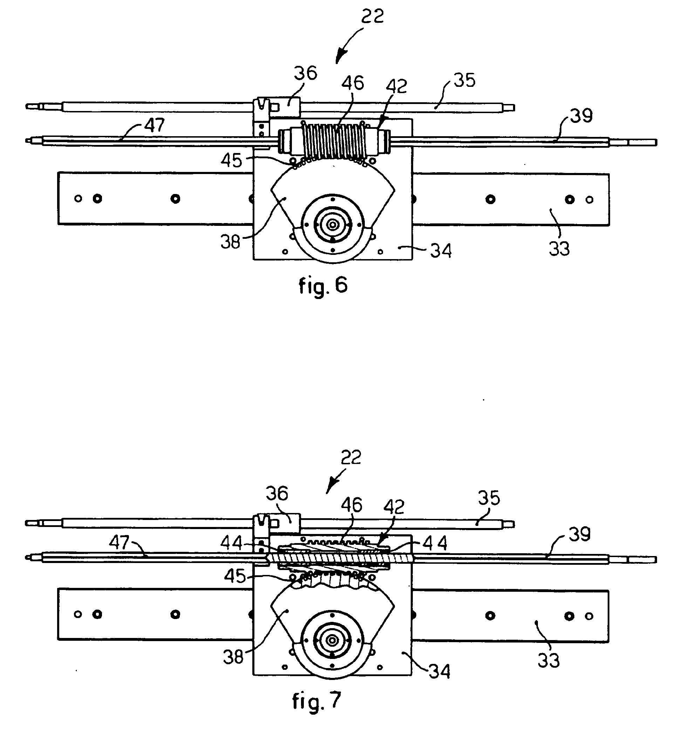

The second movement unit 22 (figs. 6 and 7), on the inner side of the lateral wall of the airtight chamber 13, and attached on suitable supports, comprises a rectified guide 33 along which a slider 34 can slide.

The second movement unit 22 also comprises a threaded bar 35, mechanically connected to the first electric motor 40, able to make it rotate around its longitudinal axis and disposed outside the airtight chamber 13. In this case the dynamic seal is obtained by means of sealing packings 48.

The guide 33 and the threaded bar 35 have longitudinal axes substantially parallel to each other.

On the threaded bar 35 a helical threading is made, on which a lead nut 36 is able to slide (figs. 6 and 7); between the helical threading of the threaded bar 35 and the inner surface of the lead nut 36 a plurality of balls are inserted, so as to achieve a screw with recirculating balls.

The slider 34 and the lead nut 36 are mechanically connected to each other so that one translation of the slider 34 on the guide 33 corresponds to one rotation of the threaded bar 35.

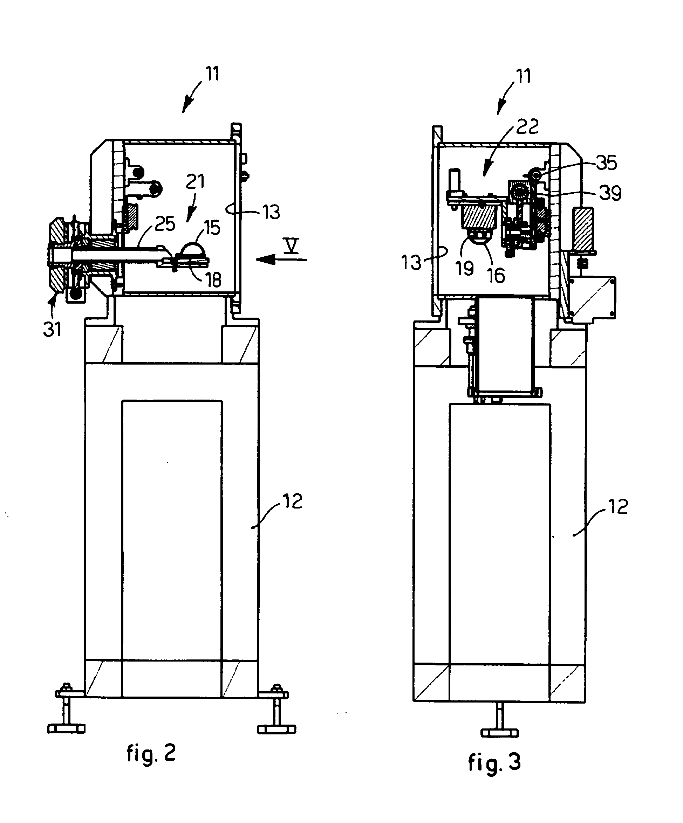

A plate, or driven helical wheel 38, is mounted on the slider 34, shaped like a circular sector, which is free to rotate around its own axis passing through the center and on which the second crystal 19 visible in fig. 3 is mounted.

The second movement unit 22 also comprises a grooved bar 39 having a substantially longitudinal groove 47 and able to be made to rotate around its own longitudinal axis by the second electric motor 41, disposed outside the airtight chamber 13. The dynamic seal is obtained by means of sealing packings 49.

In order to maintain the identical angular resolution, the movement of the second crystal 19 needs the same factor of reduction used for the first crystal 18. Therefore, between the second electric motor 41 and the grooved bar 39 two reduction units are mechanically interposed.

The first reduction unit, shown partly in fig. 1, is located outside the airtight chamber 13 in proximity with the second electric motor 41.

The second reduction unit 42, hollow inside, is mounted on the slider 34 and the grooved bar 39 is inserted along its longitudinal axis.

The second reduction unit 42 comprises a worm screw 46 which cooperates with mating seatings 45 made on the outer edge of the driven helical wheel 38.

The second reduction unit 42 houses inside it, at the ends, two sleeves with balls 44 which can slide freely along the grooved bar 39 and whose balls are at least partly inserted in the groove 47.

The grooved bar 39 is therefore able to transmit the moment of torque to the worm screw 46 through the two sleeves with balls 44 and at the same time the slider 34, and consequently the whole second reduction unit 42, are free in translation.

The second movement unit 22 allows to perform two movements, rotation and translation, of the second crystal 19 independently of each other.

In this way, the rotation of the second crystal 19 associated with the translation of the slider 34 allows to reach the correct positions that maintain the beam at a constant height and parallel to the input beam.

In this case, with hard X-ray radiation, the monochromator 11 isolates the beam of monochromatic radiations "M" by means of diffraction.

In this way, the wavelength of the radiation reflected by the first crystal 18 changes according to the angle of reflection, that is, the angular position of the first crystal 18. When the angular position varies, the wavelength of the beam of monochromatic radiations "M" varies, and hence so does its energy.

In order to maintain the diffraction condition, and to keep constant the quantity of misalignment between the beam of polychromatic radiations "P" and the beam of monochromatic radiations "M", when the angular position of the first crystal 18 varies, the movements of the first and second movement units 21, 22 are independent of each other and can be used for continuous scanning, so as to describe a trajectory defined by Bragg's Law.

Both movement units 21 and 22 have as a mechanical reference the fixed lateral wall of the airtight chamber 13 which is of great thickness and is adequately reinforced by ribs in order to prevent any deformation induced by the difference in pressure between inside and outside.

It is provided to associate with the drive unit 31 and the first and second electric motor 40, 41 and with the first and second movement unit 21, 22 a respective sensor or encoder, able to detect the angular position of the first crystal 18, the position of the slider 34 on the guide 33 and the angular position of the second crystal 19, respectively.

It is also provided to control the movement of said motors by means of a command and control unit 50 shown schematically in fig. 1 which, based on the data detected by the position sensors and on the wavelength of the beam of monochromatic radiations "M" which the user wishes to obtain, commands and controls the drive unit 31 and the first and second electric motor 40, 41.

It is clear that modifications and/or additions of parts may be made to the movement device 10 as described heretofore, without departing from the field and scope of the present invention.

It is also clear that, although the present invention has been described with reference to some specific examples, a person of skill in the art shall certainly be able to achieve many other equivalent forms monochromator with movement devices, having the characteristics as set forth in the claims and hence all coming within the field of protection defined thereby.

## Claims

1. Monochromator (11) with a movement device, the monochromator (11) having an airtight chamber (13) inside which a first (18) and a second (19) optical means are disposed able to isolate a beam of output monochromatic radiations (M) from a beam of input polychromatic radiations (P), wherein said movement device comprises motor means having a first drive unit (31), a first (40) and a second motor (41) disposed outside said chamber (13) and able to orientate and/or position said optical means (18, 19) with respect to the direction of incidence of the beam so that said beam of monochromatic radiations (M) possesses at least a desired wavelength with respect to said beam of polychromatic radiations (P), wherein a first transmission member (21) is connected to said first drive unit (31) for selectively transmitting a rotational motion to said first optical means (18), and wherein a second transmission member (22) is connected to said first (40) and second (41) motors for selectively transmitting a rotational-translatory motion to said second optical means (19),
**characterized in that** it comprises sealing means (27, 28, 29, 30, 48, 49) associated with at least a wall of said chamber (13), wherein said first transmission member (21) and said second transmission member (22) are inserted free to rotate in said sealing means (27, 28, 29, 30, 48, 49) in order to allow the selective movement of said optical means (18, 19), and **in that** said second transmission member (22) comprise:
- guide means (33) on which a slider (34) is able to slide linearly, on which a supporting element (38) is constrained free to rotate, and able to support said second optical element (19),
- a first rotary bar (35) mechanically connected at one end to said first motor (40) for transmitting the linear motion to said slider (34),
- a second rotary bar (39) mechanically connected at one end to said second motor (41) and on which a tubular element (42) is free to slide linearly,
wherein said second rotary bar (39) and said tubular element (42) comprise respective attachment means (44, 47) mating with teach other for transmitting the torque from said second rotary bar (39) to said tubular element (42), and wherein said tubular element (42) is able to transmit said torque to said supporting element (38) by means of threaded coupling.

2. Monochromator as in claim 1, **characterized in that** said drive unit and first and second motor means (31, 40, 41) are independent of each other.

3. Monochromator as in any claim hereinbefore, **characterized in that** said chamber (13) is maintained at a pressure lower than atmospheric pressure.

4. Monochromator as in claims 1, **characterized in that** said first transmission member (21) comprises at least a bar (25) having at one end a supporting element (26) for the first optical means (18) and mechanically connected at the other end to said first drive unit (31), said bar (25) being inserted free to rotate in at least an annular element (30) of said sealing means (27, 28, 29, 30, 48, 49).

5. Monochromator as in claim 1, **characterized in that** said first rotary bar (35) and said second rotary bar (39) are inserted free to rotate in at least a respective annular element (48, 49) of said sealing means (27, 28, 29, 30, 48, 49).

6. Monochromator as in claims 4 and 5, **characterized in that** said annular element (30, 48, 49) is a packing, a sealing ring or an o-ring.

7. Monochromator as in any claim hereinbefore, **characterized in that** it comprises sensor means associated at least with said motor means (31, 40, 41) and/or said mechanical transmission members (21, 22) and able to detect at least the position of said optical means (18, 19).

8. Monochromator as in claim 7, **characterized in that** it comprises a command and control unit (50) which commands and controls at least said motor means (31, 40, 41) at least according to the data detected by said sensor means and according to the desired wavelength of the beam of monochromatic radiations (M).

## Patentansprüche

1. Monochromator (11) mit einer Bewegungseinrichtung, wobei der Monochromator (11) eine luftdichte Kammer (13) aufweist, in der erste (18) und zweite (19) optische Mittel angeordnet sind, die in der Lage sind, einen Strahl von ausgegebenen monochromatischen Strahlungen (M) von einem Strahl von eingegebenen polychromatischen Strahlungen (P) zu isolieren, wobei die Bewegungseinrichtung Motormittel mit einer ersten Antriebseinheit (31), einem ersten (40) und einem zweiten Motor (41) aufweist, die außerhalb der Kammer (13) angeordnet und in der Lage sind, die optischen Mittel (18, 19) in Bezug auf die Richtung des Einfalls des Strahls auszurichten und/oder zu positionieren, so dass der Strahl von monochromatischen Strahlungen (M) zumindest eine gewünschte Wellenlänge in Bezug auf den Strahl von polychromatischen Strahlungen (P) besitzt, wobei ein erstes Übertragungselement (21) mit der ersten Antriebseinheit (31) verbunden ist, um eine Drehbewegung selektiv an die ersten optischen Mittel (18) zu übertragen, und wobei ein zweites Übertragungselement (22) mit dem ersten (40) und dem zweiten (41) Motor verbunden ist, um eine drehende-translatorische Bewegung selektiv an die zweiten optischen Mittel (19) zu übertragen,
**dadurch gekennzeichnet, dass** er Dichtungsmittel (27, 28, 29, 30, 48, 49) aufweist, die zumindest einer Wand der Kammer (13) zugeordnet sind, wobei das erste Übertragungselement (21) und das zweite übertragungselement (22) frei drehbar in die Dichtungsmittel (27, 28, 29, 30, 48, 49) eingeschoben sind, um die selektive Bewegung der optischen Mittel (18, 19) zu ermöglichen, und dass das zweite Übertragungselement (22) aufweist:
- Führungsmittel (33), auf denen ein Schieber (34) linear gleiten kann, auf dem ein Tragelement (38) frei drehbar eingespannt ist und das zweite optische Element (19) tragen kann,
- eine erste Drehstange (35), die mit einem Ende des ersten Motors (40) mechanisch verbunden ist, um die Linearbewegung an den Schieber (34) zu übertragen,
- eine zweite Drehstange (39), die mit einem Ende des zweiten Motors (41) mechanisch verbunden ist und auf der ein rohrförmiges Element (42) linear frei gleiten kann,
wobei die zweite Drehstange (39) und das rohrförmige Element (42) jeweilige Befestigungsmittel (44, 47) aufweisen, die zusammen passen, um das Drehmoment von der zweiten Drehstange (39) an das rohrförmige Element (42) zu übertragen, und wobei das rohrförmige Element (42) in der Lage ist, das Drehmoment über eine Schraubkupplung an das Tragelement (38) zu übertragen.

2. Monochromator (11) nach Anspruch 1, **dadurch gekennzeichnet, dass** die Antriebseinheit und die ersten und zweiten Motormittel (31, 40, 41) voneinander unabhängig sind.

3. Monochromator (11) nach einem der vorhergehenden Ansprüche, **dadurch gekennzeichnet, dass** die Kammer (13) auf einem Druck unter atmosphärischem Druck gehalten wird.

4. Monochromator (11) nach Anspruch 1, **dadurch gekennzeichnet, dass** das erste übertragungselement (21) mindestens eine Stange (25) aufweist, die an einem Ende ein Tragelement (26) für die ersten optischen Mittel (18) aufweist, und die an dem anderen Ende mit der ersten Antriebseinheit (31) verbunden ist, wobei die Stange (25) frei drehbar in mindestens ein ringförmiges Element (30) der Dichtungsmittel (27, 28, 29, 30, 48, 49) eingeschoben ist.

5. Monochromator (11) nach Anspruch 1, **dadurch gekennzeichnet, dass** die erste Drehstange (35) und die zweite Drehstange (39) frei drehbar in mindestens ein jeweiliges ringförmiges Element (48, 49) der Dichtungsmittel (27, 28, 29, 30, 48, 49) eingeschoben sind.

6. Monochromator (11) nach Anspruch 4 und 5, **dadurch gekennzeichnet, dass** das ringförmige Element (30, 48, 49) ein Packungsring, ein Dichtungsring oder ein O-Ring ist.

7. Monochromator (11) nach einem der vorhergehenden Ansprüche, **dadurch gekennzeichnet, dass** er Sensormittel aufweist, die zumindest den Motormitteln (31, 40, 41) und/oder den mechanischen Übertragungselementen (21, 22) zugeordnet und in der Lage sind, zumindest die Position der optischen Mittel (18, 19) zu erfassen.

8. Monochromator (11) nach Anspruch 7, **dadurch gekennzeichnet, dass** er eine Befehls- und Steuereinheit (50) aufweist, die zumindest die Motormittel (31, 40, 41) zumindest gemäß den von den Sensormitteln erfassten Daten und gemäß der gewünschten Wellenlänge des Strahls von monochromatischen Strahlungen (M) bedient und steuert.

## Revendications

1. Monochromateur (11) avec un dispositif de déplacement, le monochromateur (11) comportant une chambre étanche à l'air (13) à l'intérieur de laquelle des premiers (18) et deuxièmes (19) moyens optiques sont disposés capables d'isoler un faisceau de rayonnements monochromatiques de sortie (M) d'un faisceau de rayonnements polychromatiques d'entrée (P), dans lequel ledit dispositif de déplacement comprend des moyens formant moteur comportant une première unité d'entraînement (31), un premier (40) et un deuxième moteur (41) disposés à l'extérieur de ladite chambre (13) et capables d'orienter et/ou de positionner lesdits moyens optiques (18, 19) par rapport à la direction d'incidence du faisceau de sorte que ledit faisceau de rayonnements monochromatiques (M) a au moins une longueur d'onde souhaitée par rapport audit faisceau de rayonnements polychromatiques (P), dans lequel un premier élément de transmission (21) est relié à ladite première unité d'entraînement (31) pour transmettre de manière sélective un mouvement de rotation auxdits premiers moyens optiques (18), et dans lequel un deuxième élément de transmission (22) est relié auxdits premier (40) et deuxième (41) moteurs pour transmettre de manière sélective un mouvement de rotation-translation auxdits deuxièmes moyens optiques (19),
**caractérisé en ce qu'**il comprend des moyens d'étanchéité (27, 28, 29, 30, 48, 49) associés à au moins une paroi de ladite chambre (13), dans lequel ledit premier élément de transmission (21) et ledit deuxième élément de transmission (22) sont insérés en étant libres de tourner dans lesdits moyens d'étanchéité (27, 28, 29, 30, 48, 49) afin de permettre le déplacement sélectif desdits moyens optiques (18, 19), et **en ce que** ledit deuxième élément de transmission (22) comprend :
- des moyens de guidage (33) sur lesquels un élément coulissant (34) est capable de coulisser linéairement, sur lequel un élément de support (38) est contraint en étant libre de tourner, et capable de supporter ledit deuxième élément optique (19),
- une première barre rotative (35) reliée mécaniquement à une extrémité audit premier moteur (40) pour transmettre le mouvement linéaire audit élément coulissant (34),
- une deuxième barre rotative (39) reliée mécaniquement à une extrémité audit deuxième moteur (41) et sur laquelle un élément tubulaire (42) est libre de coulisser linéairement,
dans lequel ladite deuxième barre rotative (39) et ledit élément tubulaire (42) comprennent des moyens de fixation (44, 47) respectifs s'accouplant l'un à l'autre pour transmettre le couple de ladite deuxième barre rotative (39) audit élément tubulaire (42), et dans lequel ledit élément tubulaire (42) est capable de transmettre ledit couple audit élément de support (38) au moyen d'un raccord fileté.

2. Monochromateur selon la revendication 1, **caractérisé en ce que** ladite unité d'entraînement et lesdits premier et deuxième moyens formant moteur (31, 40, 41) sont indépendants les uns des autres.

3. Monochromateur selon l'une quelconque des revendications précédentes, **caractérisé en ce que** ladite chambre (13) est maintenue à une pression inférieure à la pression atmosphérique.

4. Monochromateur selon la revendication 1, **caractérisé en ce que** ledit premier élément de transmission (21) comprend au moins une barre (25) comportant à une extrémité un élément de support (26) pour les premiers moyens optiques (18) et reliée mécaniquement à l'autre extrémité à ladite première unité d'entraînement (31), ladite barre (25) étant insérée en étant libre de tourner dans au moins un élément annulaire (30) desdits moyens d'étanchéité (27, 28, 29, 30, 48, 49).

5. Monochromateur selon la revendication 1, **caractérisé en ce que** ladite première barre rotative (35) et ladite deuxième barre rotative (39) sont insérées en étant libres de tourner dans au moins un élément annulaire (48, 49) respectif desdits moyens d'étanchéité (27, 28, 29, 30,48, 49).

6. Monochromateur selon les revendications 4 et 5, **caractérisé en ce que** ledit élément annulaire (30, 48, 49) est une garniture d'étanchéité, une bague d'étanchéité ou un joint torique.

7. Monochromateur selon l'une quelconque des revendications précédentes, **caractérisé en ce qu'**il comprend des moyens formant capteur associés au moins auxdits moyens formant moteur (31, 40, 41) et/ou auxdits éléments de transmission mécaniques (21, 22) et capables de détecter au moins la position desdits moyens optiques (18, 19).

8. Monochromateur selon la revendication 7, **caractérisé en ce qu'**il comprend une unité de commande et de contrôle (50) qui commande et contrôle au moins lesdits moyens formant moteur (31, 40, 41) au moins conformément à des données détectées par lesdits moyens formant capteur et conformément à la longueur d'onde souhaitée du faisceau de rayonnements monochromatiques (M).
